Europäisches Patentamt

European Patent Office

Office européen des brevets

(19)

(11) Veröffentlichungsnummer: **0 293 322**
A2

(12) **EUROPÄISCHE PATENTANMELDUNG**

(21) Anmeldenummer: 88730107.5

(22) Anmeldetag: 06.05.88

(51) Int. Cl.⁴: **B 22 C 1/00**
B 22 C 9/02, C 04 B 35/00

(30) Priorität: 27.05.87 DE 8707672

(43) Veröffentlichungstag der Anmeldung:
30.11.88 Patentblatt 88/48

(84) Benannte Vertragsstaaten:
AT CH FR IT LI NL

(71) Anmelder: MANNESMANN Aktiengesellschaft
Mannesmannufer 2
D-4000 Düsseldorf 1 (DE)

(72) Erfinder: Klein, Peter, Dipl.-Ing.
Max-Reger-Strasse 64
D-8501 Schwaig (DE)

Würl, Ernst
Am galgenfeld 29
D-8831 Höttingen (DE)

(74) Vertreter: Meissner, Peter E., Dipl.-Ing. et al
Meissner & Meissner Patentanwälte Herbertstrasse 22
D-1000 Berlin 33 Grunewald (DE)

(54) **Maschinenbett einer Spritzgiessmaschine.**

(57) Die Erfindung betrifft ein Maschinenbett einer Spritzgieß-maschine. Um ein Maschinenbett zu erstellen, daß einfach zu produzieren ist und unter Vermeidung der bisher bekannten Nachteile so formstabil ist, daß exakte Werkzeugplattenführungen und Parallelität gegeben ist, um Präzisionsteile herstellen zu können, wird vorgeschlagen, daß das Maschinenbett einer Spritzgießmaschine einen biegesteifen Formkörper aus Polymerbeton (1) in Kastenbauweise, der im oberen und unteren Bereich angegossene oder eingeformte Befestigungselemente (4) für den Maschinenoberbau bzw. die Verankerung am Fundament (3) aufweist sowie ausgenommene Montageöffnun-gen (6) enthält.

EP 0 293 322 A2

**Beschreibung**

## Maschinenbett einer Spritzgießmaschine

Die Erfindung betrifft ein Maschinenbett einer Spritzgießmaschine. Das steigende Marktvolumen für Spritzgießpräzisionsteile, wie z. B. Computer-Peripherie, Kopiergeräte, Fotoindustrie, Telekomunikationsgeräte, optische Speichermedien etc. erfordert entsprechende Präzisionsmaschinen. Um den hohen Anforderungen gerecht zu werden, müssen die Maschinen besondere Eigenschaften aufweisen, wie erhöhte Formsteifigkeit, exakte Werkzeugplattenführung und -parallelität auch im Grenzschließkraftbereich, Prägemöglichkeit und anderes.

Zum heutigen Zeitpunkt werden die Maschinenbetten der Spritzgießmaschinen in Schweißkonstruktion ausgeführt. Das führt dazu, daß trotz sorgfältiger Ausrichtung der Maschinenbetten Parallelitätsabweichungen der Werkzeugauf spannplatten auftreten können. Dies erklärt sich durch die der Schweißkonstruktion eigene Elastizität. Eine Stabilitätserhöhung durch größeren Materialeinsatz ist bei Schweißkonstruktionen aus wirtschaftlichen Erwägungen nicht sinnvoll. Außerdem wirkt sich bei den bekannten Schweißkonstruktionen die Tatsache nachteilig aus, daß sie einen niedrigen Dämpfungsgrad aufweisen, Oberflächenschutz benötigen und sowohl optische als auch sicherheitstechnische Verkleidungen erfordern. Die Anschlußflächen zum Fundament und für die Funktionsteile der Maschine müssen zeit- und kostenaufwendig spanabhebend bearbeitet werden.

Ausgehend von bekannten Maschinenbetten in Stahlkonstruktion und zur Vermeidung der geschilderten Nachteile liegt der Erfindung die Aufgabe zugrunde, ein Maschinenbett zu finden, daß einfach herzustellen ist und unter Vermeidung der geschilderten Nachteile so formstabil ist, daß exakte Werkzeugplattenführungen und Parallelität gegeben ist, um Präzisionsteile herstellen zu können.

Zur Lösung der Aufgabe schlägt die Erfindung ein Maschinenbett vor, daß gekennzeichnet ist durch einen biegesteifen Formkörper aus Polymerbeton in Kastenbauweise, der im oberen und unteren Bereich angegossene oder eingeformte Befestigungselemente für den Maschinenoberbau bzw. die Verankerung am Fundemant aufweist sowie ausgenommene Montageöffnungen enthält. Der verwendete Polymerbeton zeichnet sich durch hohe Gestaltungsfreiheit aus. Er besitzt eine zwölffach höhere Dämpfung als Stahl, hohe Körperschalldämpfung und große Formsteifigkeit. Durch Angießen oder Einformen der Befestigungselemente entfallen spanabhebende Bearbeitungen. Durch die Möglichkeit des Einfärbens des Polymerbetons entfällt eine optische Bearbeitung des Maschinenbettes durch Lackieren oder Verkleidungen.

Nach einem günstigen Merkmal der Erfindung ist vorgesehen, daß in den Formkörpern mindestens ein in Maschinenbettlängsrichtung verlaufender Installationskanal für Leitungen und Kabel integriert ist. Auf diese Weise können Installationskanäle bereits beim Abguß des Formkörpers berücksichtigt werden und so integriert werden, daß mit ihnen die Stabilität des Formkörpers zusätzlich verstärkt wird.

Wenn nach einem anderen Merkmal der Erfindung mindestens ein Teil des Formkörpers als geschlossener Behälter ausgeformt ist, der den Öltank bildet, führt dies zu einer Verminderung des Schalldruckpegels, da die Tankwände von Erregerschwingungen nicht zum Schwingen gebracht und folglich sich auch nicht als Schallschwingungen verbreiten können.

Selbstverständlich kann nach einem weiteren Vorschlag der Erfindung vorgesehen sein, daß ein aus glasfaserverstärktem Kunststoff gebildeter Öltank in den Formkörßer eingegossen oder eingelassen ist.

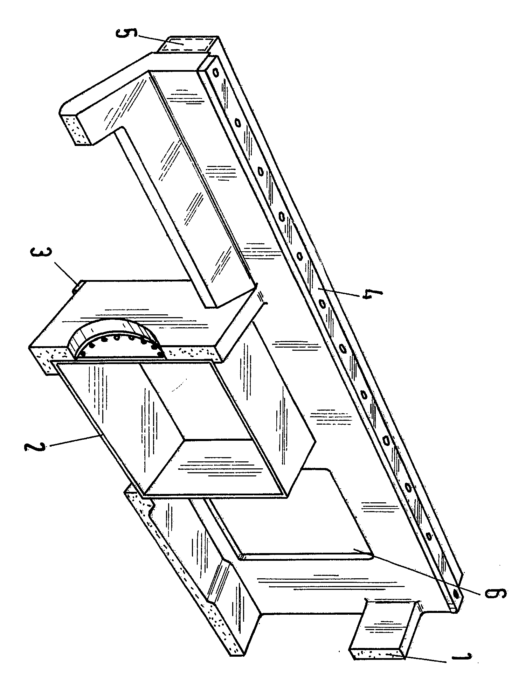

Ein Ausführungsbeispiel der Erfindung ist in der Zeichnung dargestellt und wird nachfolgend beschrieben. Die Figur zeigt in perspektivischer Darstellung ein erfindungsgemäßes Maschinenbett im Halbschnitt. Der Formkörper des Maschinenbettet 1 besteht aus Polymerbeton und ist für die Elemente wie Öltank mit Reinigungsöffnung 2, Auflageleisten 3, Oberbau-Befestigungsleisten 4 und Kabelkanal 5 unterbrochen. Die Montageöffnungen 6 und Durchbrüche für die Installation sind beim Abguß des Formkörpers bereits berücksichtigt.

Im dargestellten Beispiel ist der mit 2 bezeichnete Öltank aus glasfaserverstärktem Kunststoff hergestellt und in die Struktur des Formkörpers 1 eingelassen. Selbstverständlich kann der Öltank unmittelbar in das Maschinenbett eingegossen oder ein Teil des Formkörpers sein.

Der Vorteil der Erfindung besteht darin, daß praktisch völlige Gestaltungsfreiheit des Maschinenbettes besteht, das durch den Werkstoff Polymerbeton keine zusätzlichen Bearbeitungsschritte mehr erfordert und trotzdem hohe Stabilität und Festigkeitswerte bei günstigsten Dämpfungseigenschaften aufweist.

## Patentansprüche

1. Maschinenbett einer Spritzgießmaschine, gekennzeichnet durch einen biegesteifen Formkörper aus Polymerbeton (1) in Kastenbauweise, der im oberen und unteren Bereich angegossene oder eingeformte Befestigungslemente (4) für den Maschinenoberbau bzw. die Verankerung am Fundament (3) aufweist sowie ausgenommene Montageöffnungen (6) enthält.

2. Maschinenbett nach Anspruch 1, dadurch gekennzeichnet, daß in den Formkörper (1) mindestens ein in Maschinenbettlängsrichtung verlaufender Installationskanal (5) für Leitungen und Kabel integriert ist.

3. Maschinenbett nach Anspruch 1 oder 2, dadurch gekennzeichnet,

daß mindestens ein Teil des Formkörpers (1) als geschlossener Behälter ausgeformt ist, der den Öltank (2) bildet.

4. Maschinenbett nach Anspruch 1 oder 2, dadurch gekennzeichnet,

daß ein aus glasfaserverstärktem Kunststoff gebildeter Öltank (2) in den Formkörper (1) eingegossen oder eingelassen ist.

0293322